# FASCICULE DE BREVET EUROPEEN

(11) **EP 1 581 424 B1**
(45) Date de publication et mention de la délivrance du brevet: **16.08.2006**
(21) Numéro de dépôt: 03815705.3
(22) Date de dépôt: 29.12.2003
(51) Int. Cl.: B64C 25/58

(54) **AMORTISSEUR DE JAMBE DE TRAIN D 'ATTERRISSAGE, ET TRAIN D'ATTERRISSAGE A JAMBES INDEPENDANTES EQUIPEES D'UN TEL AMORTISSEUR**
FAHRWERK-FEDERBEINDÄMPFER UND DIESEN ENTHALTENDES FAHRWERK MIT UNABHÄNGIGEN FEDERBEINEN
LANDING GEAR STRUT DAMPER, AND LANDING GEAR WITH INDEPENDENT STRUTS COMPRISING SAME

(30) Priorité: 10.01.2003 FR 0300229
(43) Date de publication de la demande: 05.10.2005
(73) Titulaire: MESSIER-DOWTY S.A., 78140 Velizy Villacoublay (FR)
(72) Inventeur: DUCOS, Dominique, F-91600 Savigny-sur-Orge (FR); LOCUFIER, Jean-François, F-78120 Rambouillet (FR); BENNETT, Ian, Cheltenham Gl51 6AF (GB); SMART, Davis, Leckhampton, Cheltenham GL53 OEY (GB)
(74) Mandataire: Jaunez, Xavier
(86) Numéro de dépôt international: PCT/FR2003/003925
(87) Numéro de publication internationale: WO 2004/069653

(56) Documents cités:
- EP-A- 0 614 804
- GB-A- 2 057 629

## Description

### DOMAINE DE L'INVENTION

La présente invention concerne un amortisseur de jambe de train d'atterrissage d'aéronef, ainsi qu'un train d'atterrissage relevable, du type à relevage vertical, comportant une pluralité de jambes indépendantes agencées les unes derrière les autres, et dont chaque jambe est équipée d'un tel amortisseur.

### ARRIERE-PLAN DE L'INVENTION

Dans certaines situations, lorsque l'aéronef est à l'arrêt ou en déplacement lent au sol, on souhaite pouvoir modifier l'assiette de l'aéronef, c'est-à-dire l'inclinaison de son axe longitudinal et/ou de son axe transversal.

Dans le document US-A-5 310 140 de la demanderesse, on a illustré une approche consistant à modifier la longueur du train avant, sans toucher aux atterrisseurs principaux. La structure de l'amortisseur décrit dans ce document permet d'obtenir aisément un rehaussement du train lorsque l'aéronef est à l'arrêt ou en déplacement lent au sol, sans exiger l'utilisation de la génération hydraulique de l'aéronef, c'est-à-dire sans exiger que les moteurs soient activés.

Le document US-A-5 310 139 de la demanderesse illustre par ailleurs un amortisseur de train avant conçu pour assurer la même fonction. On pourra également se référer au document GB-A-2 057 629.

La présente invention s'intéresse plutôt aux amortisseurs équipant des trains d'atterrissage principaux d'avions gros porteurs, du type à relevage vertical, comportant une pluralité de jambes indépendantes agencées les unes derrière les autres pour former, en position train bas, une rangée parallèle au plan longitudinal de l'avion, et en extrémité de chacune desquelles est montée une paire de roues. Un tel train d'atterrissage relevable pour avion gros porteur est par exemple illustré dans les documents EP-A-0 676 328 et EP-A-0 614 804 de la demanderesse.

Le document EP-A-0 614 804 est consideré comme l'état de la technique le plus proche.

Dans d'autres situations, on cherche à avoir un raccourcissement d'une ou plusieurs jambes lorsque l'aéronef est à l'arrêt ou en déplacement lent au sol. Un tel raccourcissement peut s'avérer en effet intéressant non seulement lorsque l'on veut modifier l'assiette de l'aéronef à l'arrêt, en particulier lors du chargement de l'aéronef, mais aussi dans d'autres situations particulières comme le changement de pneumatique ou le déchargement de la jambe avant pour le soulagement des manoeuvres en virage. En effet, dans cette avant-dernière situation, on utilise classiquement des systèmes de cric permettant de relever la structure d'aéronef pour dégager le pneumatique à remplacer de son contact avec le sol.

### OBJET DE L'INVENTION

L'invention a pour objet de concevoir un amortisseur de train d'aéronef comme décrit par la revendication 1 et qui est capable de combiner à la fois des fonctions d'allongement et de raccourcissement de la jambe de train équipée de cet amortisseur, et plus particulièrement un amortisseur capable de procurer une très grande course d'affaissement afin de permettre un chargement de l'aéronef quel que soit le relief du terrain concerné et quel que soit le type de chariot utilisé, tout en garantissant une assiette et une garde au sol aussi parfaites que possible.

### BREVE DESCRIPTION DE L'INVENTION

Pour résoudre ce problème, l'invention propose un amortisseur de jambe de train d'atterrissage d'aéronef du type comportant un caisson principal et une tige-piston dont l'extrémité coulisse dans ledit caisson principal coaxialement à l'axe de celui-ci, ladite tige-piston délimitant avec le caisson principal une chambre principale de fluide hydraulique et une chambre annulaire de fluide hydraulique communiquant avec ladite chambre principale par l'intermédiaire d'un diaphragme associé, et ladite tige-piston présentant intérieurement deux chambres adjacentes isolées l'une de l'autre par un piston séparateur, dont une chambre de fluide hydraulique qui communique avec la chambre principale par l'intermédiaire d'un diaphragme associé et une chambre de gaz sous pression, ledit amortisseur étant remarquable en ce qu'il comporte en outre un premier caisson secondaire dont une extrémité coulisse télescopiquement sur l'autre extrémité de la tige-piston précitée en délimitant avec le fond de ladite tige-piston une première chambre secondaire de fluide hydraulique qui est fermée par un organe associé de verrouillage hydraulique ainsi qu'une première chambre secondaire annulaire de fluide hydraulique qui est reliée à un circuit de commande associé, permettant ainsi de raccourcir la longueur totale de l'amortisseur en vue d'un affaissement de la jambe de train, ainsi qu'un deuxième caisson secondaire coulissant télescopiquement sur l'autre extrémité du premier caisson secondaire en délimitant avec le fond dudit premier caisson secondaire une deuxième chambre secondaire de fluide hydraulique qui est fermée par un organe associé de verrouillage hydraulique ainsi qu'une deuxième chambre secondaire annulaire de fluide hydraulique qui est reliée à un circuit de commande associé, permettant de rallonger la longueur totale de l'amortisseur en vue d'un rehaussement de la jambe de train.

Un tel amortisseur permet ainsi d'assurer, en plus de sa fonction classique d'amortisseur, une double fonction de positionnement, en disposant d'une course d'affaissement et d'une course de rehaussement selon le problème posé.

De préférence, la première chambre secondaire de fluide hydraulique est séparée de la chambre de gaz sous pression par une cloison intermédiaire formant le fond de la tige-piston. Cet agencement permet une totale indépendance entre la partie absorbeur de choc et la partie affaissement, ce qui permet d'éliminer tout risque de mélange air-huile, lequel risque n'est jamais écarté lorsque l'on utilise des systèmes de joints qui peuvent être amenés à fuir.

Avantageusement encore, en position de raccourcissement maximum de l'amortisseur par suite de la rentrée de la tige-piston dans le premier caisson secondaire, ledit premier caisson secondaire vient en butée contre le caisson principal, ce qui garantit une garde au sol prédéterminée pour l'aéronef dans la position d'affaissement maximal des jambes de train concernées. Une telle butée positive constitue une sécurité très importante qui évite avec certitude tout contact entre le carénage de l'aéronef et le sol.

De préférence encore, en position de rallongement maximum de l'amortisseur par suite de la sortie du premier caisson secondaire hors du second caisson secondaire, un épaulement intérieur dudit deuxième caisson secondaire vient en butée contre un épaulement extérieur dudit premier caisson secondaire, ce qui garantit la constance de la position de rehaussement pour la jambe de train concernée.

Il sera avantageux de prévoir en outre que les circuits de commande associés aux première et deuxième chambres secondaires annulaires de fluide hydraulique comportent chacun une électrovanne actionnable individuellement.

L'invention concerne également un train d'atterrissage relevable d'aéronef, du type à relevage vertical, comportant une pluralité de jambes agencées les unes derrière les autres pour former, en position train bas, une rangée parallèle au plan longitudinal médian de l'aéronef, chaque jambe comportant une pièce de structure rigidement solidaire d'une structure d'aéronef, un balancier articulé sur l'extrémité inférieure de ladite pièce de structure de façon que ledit balancier soit déplaçable dans un plan vertical avec sa paire de roues, et un amortisseur interposé entre un appendice du balancier et au moins un élément mobile faisant partie de la tringlerie de manoeuvre du train, ledit train d'atterrissage étant remarquable en ce que l'amortisseur de chaque jambe est un amortisseur présentant l'une au moins des caractéristiques précitées, permettant de relever ou d'abaisser sélectivement une paire de roues, en vue d'un affaissement ou d'un rehaussement de ladite jambe, lorsque l'aéronef est à l'arrêt ou en déplacement lent au sol.

De préférence, les amortisseurs dudit train ont des circuits de commande agencés pour permettre une commande individuelle sélective ou une commande groupée du rallongement ou du raccourcissement desdits amortisseurs.

De préférence enfin, les amortisseurs du train d'atterrissage sont dimensionnés pour garantir, par une butée d'appui associée, une garde au sol prédéterminée pour l'aéronef dans la position d'affaissement maximal des jambes d'une même rangée.

D'autres caractéristiques et avantages de l'invention apparaîtront plus clairement à la lumière de la description qui va suivre concernant un mode d'exécution particulier.

### BREVE DESCRIPTION DES DESSINS

Il sera fait référence aux figures du dessin annexé où :
- la figure 1 est une coupe axiale illustrant un amortisseur conforme à l'invention ;
- la figure 2 illustre un train d'atterrissage à trois jambes indépendantes dont chacune est équipée d'un amortisseur du type illustré en figure 1, la position étant train bas avec les trois paires de roues au même niveau, et l'amortisseur de la jambe centrale étant représenté en coupe pour plus de clarté ;
- la figure 3 est une vue analogue à celle de la figure 2, et illustre le cas d'un raccourcissement de l'amortisseur de la jambe arrière, dont la paire de roues associée est relevée par rapport aux autres paires de roues, la position illustrée correspondant à un affaissement maximal, tout en conservant une garde au sol prédéterminée pour le carénage de l'aéronef dans cette position d'affaissement ; et
- la figure 4 est une vue analogue aux précédentes, illustrant une position dans laquelle la jambe arrière a son amortisseur qui est rallongé au maximum, illustrant ainsi une position de rehaussement maximal pour cette jambe de train.

### DESCRIPTION DETAILLEE DE L'INVENTION

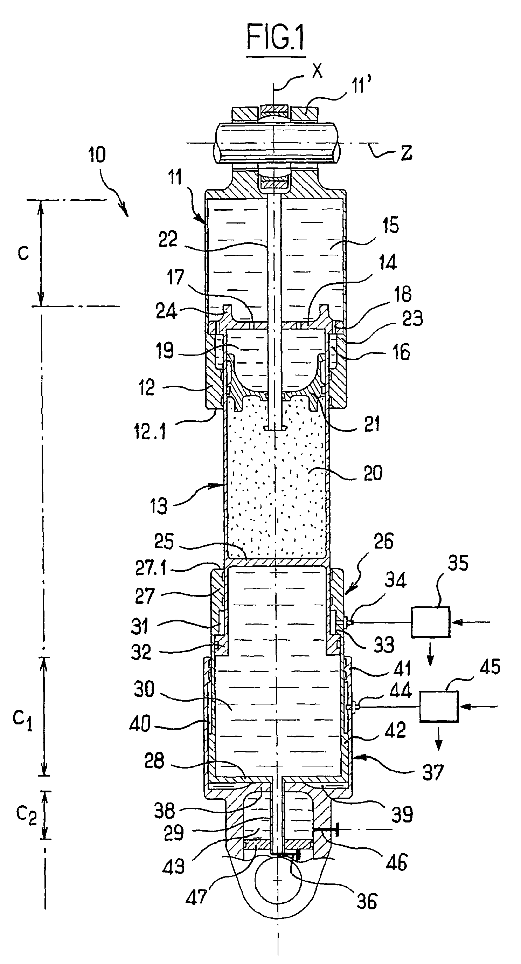

On va tout d'abord décrire, en référence à la figure 1, la structure d'un amortisseur conforme à l'invention.

La partie supérieure (sur le dessin, mais pas nécessairement dans la réalité) de l'amortisseur 10 illustré sur la figure 1, partie qui est dédiée à la fonction classique d'absorbeur de chocs et de vibrations, est de structure classique. On distingue ainsi un caisson principal 11 comportant des oreilles 11' pour son articulation sur un axe Z dont la direction est transversale au plan longitudinal médian de l'aéronef. L'axe central de l'amortisseur 10 est quant à lui noté X. Une tige-piston 13 est également prévue, dont une extrémité supérieure coulisse dans le caisson principal 11 coaxialement à l'axe X. La paroi terminale 14 de la tige-piston 13 délimite avec le caisson principal 11 une chambre principale 15 de fluide hydraulique, et une chambre annulaire 16 de fluide hydraulique communiquant avec ladite chambre principale par l'intermédiaire d'un diaphragme associé 18. La tige-piston 13 présente en outre intérieurement deux chambres adjacentes 19,20 isolées l'une de l'autre par un piston séparateur 21, dont une chambre 19 de fluide hydraulique qui communique avec la chambre principale 15 par l'intermédiaire d'un diaphragme associé 17 ménagé dans la paroi transversale 14 de la tige-piston 13, et une chambre 20 de gaz sous pression. L'extrémité concernée de la tige-piston 13 coulisse ainsi télescopiquement dans la partie inférieure élargie 12 du caisson principal 11. La position illustrée correspond à une position d'extension maximale, dans laquelle la paroi terminale 14 vient en butée contre un épaulement associé 23 du caisson principal 11. La position de rentrée maximale de la tige-piston 13 dans le caisson principal 11 est quant à elle donnée par la venue en butée de protubérances 24 ménagées sur la paroi 14 avec le fond dudit caisson principal 11. On a ici prévu la présence d'un tube de remplissage 22 permettant le remplissage initial de la chambre de gaz sous pression 20. La chambre de gaz sous pression 20 est ainsi délimitée par le piston séparateur 21 d'un côté, et par une cloison transversale terminale 25 constituant le fond de la tige-piston 13.

On va maintenant décrire la partie inférieure de l'amortisseur 10 qui est associée à une fonction positionnelle de la jambe associée.

La tige-piston 13 se prolonge au-delà de son fond 25, de façon à présenter une extension sur laquelle vient coulisser un autre caisson référencé 26, constituant un premier caisson secondaire. Ce premier caisson secondaire 26 a ainsi une extrémité élargie 27 qui coulisse télescopiquement sur l'extrémité inférieure de la tige-piston 13 en délimitant avec le fond 25 de ladite tige-piston une première chambre secondaire 30 de fluide hydraulique. Le premier caisson secondaire 26 présente à son autre extrémité un fond 28 délimitant avec le fond 25 la première chambre secondaire 30 précitée. La chambre secondaire 30 de fluide hydraulique est fermée par un organe associé de verrouillage hydraulique 36 représenté ici de façon schématique, en l'espèce à l'extrémité d'un prolongement tubulaire 29 s'étendant au-delà du fond 28 du premier caisson secondaire 26.

En outre, la partie supérieure 27 du premier caisson secondaire 26 délimite avec la partie inférieure 32 de la tige-piston 13 une première chambre secondaire annulaire 31 de fluide hydraulique, laquelle chambre est reliée à un circuit de commande associé constitué par une valve de communication 34 fixée à travers la paroi du caisson 26 et reliée à une électrovanne de commande 35.

Ainsi, en actionnant l'électrovanne de commande 35, et le verrou hydraulique 36, on peut intervenir sur le volume de cette première chambre secondaire annulaire 31, et par suite provoquer un allongement ou un raccourcissement de l'amortisseur. Dans la pratique, le but recherché sera essentiellement de raccourcir la longueur totale de l'amortisseur 10 en vue de réaliser un affaissement de la jambe de train.

L'amortisseur 10 comporte en outre un deuxième caisson secondaire 37 coulissant télescopiquement sur l'autre extrémité du premier caisson secondaire 26, en délimitant avec le fond 28 dudit premier caisson secondaire une deuxième chambre secondaire 39 de fluide hydraulique qui est fermée par un organe associé de verrouillage hydraulique 46, ainsi qu'une deuxième chambre secondaire annulaire 40 de fluide hydraulique qui est reliée à un circuit de commande associé comportant une valve de communication 44 fixée à travers la paroi du caisson 37 et reliée à une électrovanne de commande 45. La deuxième chambre secondaire annulaire 40 est ainsi délimitée entre l'extrémité supérieure 41 du deuxième caisson secondaire 37 et l'extrémité inférieure du premier caisson secondaire 26.

En agissant sur la commande de l'électrovanne 45, et le verrou hydraulique 46, on peut intervenir directement sur le volume de cette deuxième chambre secondaire annulaire 40, et par suite à provoquer le déplacement relatif entre le premier caisson secondaire 26 et le deuxième caisson secondaire 37. Dans la pratique, cette fonction sera associée à un rehaussement de la jambe de train consécutif au rallongement obtenu de la longueur totale de l'amortisseur.

Pour le verrouillage hydraulique, on a ici prévu une chambre annexe 43 de fluide hydraulique qui est délimitée d'un côté par le fond 38 du deuxième caisson secondaire 37 et par une paroi transversale 47 solidaire de l'extension tubulaire 29 du premier caisson secondaire 26. Il va de soi que l'on pourra prévoir tout autre type d'agencement visant à assurer un verrouillage hydraulique, ceci notamment pour éviter la cavitation de l'huile dans la deuxième chambre secondaire 39.

Sur la figure 1 on a noté c la course d'amortisseur, qui correspond à la distance séparant les protubérances 24 du fond du caisson principal 11. On a également noté c1 la course d'affaissement maximum, qui correspond à la course de l'extrémité 32 de la tige-piston 13 entre l'épaulement supérieur 33 du premier caisson secondaire 26 et le fond 28 dudit premier caisson secondaire. On a aussi noté c2 la course de rehaussement maximum correspondant à la distance séparant le fond 38 du deuxième caisson secondaire 37 et la paroi terminale 47, ou selon le cas la distance entre l'extrémité 41 de ce deuxième caisson secondaire 37 et l'épaulement extérieur 42 ménagé sur le premier caisson secondaire 26.

A titre indicatif, on pourra réaliser un amortisseur pour avion gros porteur capable d'avoir une course centre roue de 600 mm, une course d'affaissement (on dit parfois également de baraquage) de 570 mm, et une course de rehaussement de 240 mm.

Un tel amortisseur à triple fonction permet à la fois d'assurer la fonction d'amortisseur requise, qui est remplie de façon classique, et la double fonction positionnelle en vue d'un affaissement ou d'un rehaussement de la jambe de train concernée.

Il est à noter que la première chambre secondaire 30 de fluide hydraulique est séparée de la chambre 20 de gaz sous pression par une cloison intermédiaire formant le fond de la tige-piston 13. On peut donc observer que la première chambre secondaire de fluide hydraulique 30 et la chambre principale de fluide hydraulique 15 sont totalement séparée l'une de l'autre, ce qui permet d'éviter tout risque d'influence entre les fluides hydrauliques utilisés, toute fuite étant exclue du fait de la présence de la cloison 25 de la tige-piston 13. Ceci permet d'éviter la présence de joints à compatibilités multiples pour les fluides hydrauliques du circuit d'alimentation et ceux de l'amortisseur.

On a en outre prévu un dimensionnement particulier pour l'amortisseur précité.

En effet, en position de raccourcissement maximum de l'amortisseur 10 par suite de la rentrée de la tige-piston 13 dans le premier caisson secondaire 26, on a prévu que le premier caisson secondaire 26 vienne en butée contre le caisson principal 11. Ceci veut dire que le bord libre 27.1 de l'extrémité 27 du premier caisson secondaire 26 vient en contact dans cette position avec le bord libre 12.1 de l'extrémité 12 du caisson principal 11. Ceci est très intéressant dans la pratique dans la mesure où une telle butée positive permet de garantir une garde au sol prédéterminée pour l'aéronef dans la position d'affaissement maximal des jambes de train concernées. Grâce à ce contact de butée, quand on charge l'aéronef, il n'y a aucun risque d'enfoncement supplémentaire, de sorte que l'assiette de l'aéronef reste constante. La garde au sol est garantie, et on est tout à fait assuré que le carénage de l'aéronef ne viendra pas au contact du sol par suite d'un chargement maximal. Il va de soi qu'en l'absence d'une telle butée, le risque serait important que la roue continue à s'enfoncer.

Enfin, en position de rallongement maximum de l'amortisseur 10 par suite de la sortie du premier caisson secondaire 26 hors du deuxième caisson secondaire 37, l'épaulement intérieur 41 dudit deuxième caisson secondaire vient en butée contre l'épaulement extérieur 42 dudit premier caisson secondaire, ce qui garantit la constance de la position de rehaussement pour la jambe de train concernée.

De préférence, on prévoira que les circuits de commande associés aux première et deuxième chambres secondaires annulaires 31, 40 de fluide hydraulique comportent chacun une électrovanne 35,45 qui est actionnable individuellement.

On va maintenant illustrer un train d'atterrissage principal, du type à jambes indépendantes relevables verticalement, dont chaque jambe est équipée d'un amortisseur du type qui vient d'être décrit. Ceci permettra de mieux comprendre les nombreux avantages présentés par la structure de l'amortisseur conforme à l'invention, dans différentes situations pour l'aéronef ainsi équipé, à l'arrêt ou en position de roulage sur piste.

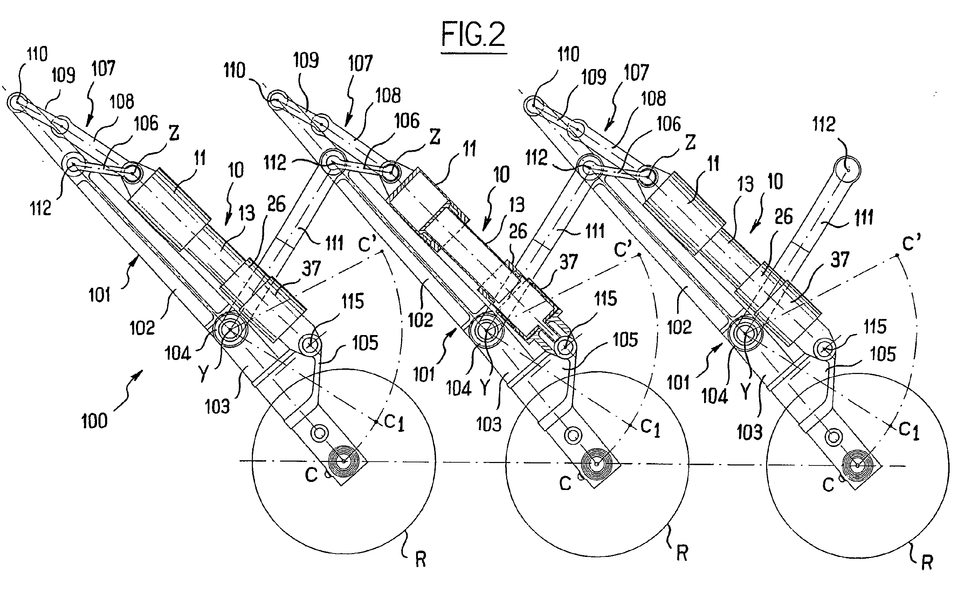

Sur la figure 2 on distingue ainsi un train d'atterrissage 100 pour avion gros porteur, du type à relevage vertical, comportant une pluralité de jambes 101 agencées les unes derrière les autres pour former, en position train bas (position illustrée sur la figure 2), une rangée parallèle au plan longitudinal médian de l'aéronef. En l'espèce, ce train principal comporte trois jambes indépendantes 101, mais ceci ne constitue naturellement qu'un exemple. Chaque jambe 101 comporte une pièce de structure 102 rigidement solidaire d'une structure d'aéronef, et un balancier 103 articulé sur l'extrémité inférieure 104 de ladite pièce de structure, selon un axe transversal Y. Chaque balancier 103, équipé d'une paire de roues R, est ainsi déplaçable dans un plan vertical en pouvant pivoter autour de l'axe Y précité qui est perpendiculaire au plan longitudinal médian de l'aéronef.

Il est en outre prévu un amortisseur 10 interposé entre un appendice intermédiaire 105 du balancier 103 et au moins un élément mobile faisant partie de la tringlerie de manoeuvre du train d'atterrissage 100. En l'espèce, on a prévu que la partie haute de l'amortisseur 10 est reliée de façon articulée à une biellette 106 elle-même articulée en 112 sur la pièce de structure 102, en étant aussi reliée une contrefiche à alignement 107, constituée par deux bras 108 et 109 articulés entre eux, le bras supérieur 109 étant en outre articulé en 110 en partie haute de la pièce de structure 102. Chaque jambe 101 est par ailleurs reliée à un vérin de commande associé, non représenté ici, par exemple en prévoyant l'articulation de la tige du vérin de relevage au niveau de l'axe Z. On distingue en outre des panneaux 111 reliant entre elles les pièces de structure adjacentes 102, chaque panneau 111 étant intercalé entre l'extrémité inférieure 104 de la pièce de structure et un point d'accrochage haut 112 aligné sur l'accrochage de la biellette 106.

La position de la figure 2 correspond à une position train bas, les amortisseurs 10 étant en position détendus (fonction d'amortisseur en position détendu, et fonction de positionnement en position neutre). Dans cette position, le centre C des roues R est dans une position basse. Lorsque l'aéronef est en contact du sol, la charge statique provoque une rentrée de la tige-piston 13 dans le caisson principal 11 de façon tout à fait classique, ce qui amène les centres C en C1. On a également illustré le point C' qui correspond à la position train rentré. Dans cette position illustrée sur la figure 2, on constate que la longueur visible de la tige-piston 13 est maximale.

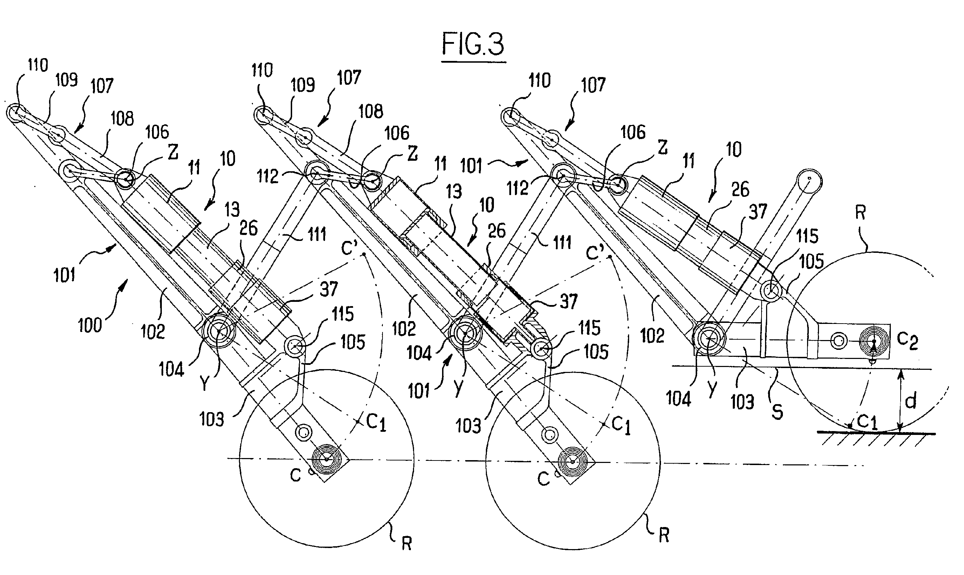

Sur la figure 3, la jambe qui est la plus en arrière a son amortisseur 10 qui est en position de raccourcissement maximum. Dans cette position, le premier caisson secondaire 26 vient en butée contre le caisson principal 11, de sorte que l'on ne voit plus la tige-piston 13 précitée. Cette position d'enfoncement maximal, obtenue par commande de l'électrovanne associée, correspond à un raccourcissement maximum de l'amortisseur 10, c'est-à-dire à un affaissement maximal de la jambe 101 concernée. Dans cette position d'affaissement maximal, le centre des roues R passe du point C1 correspondant à la charge statique normale à un point plus élevé C2. Dans cette position illustrée, on a noté d la distance qui sépare du sol le bord inférieur du carénage S de l'aéronef. Cette distance d correspond à une garde au sol prédéterminée qui est ici garantie par le contact de butée entre les caissons 11 et 26.

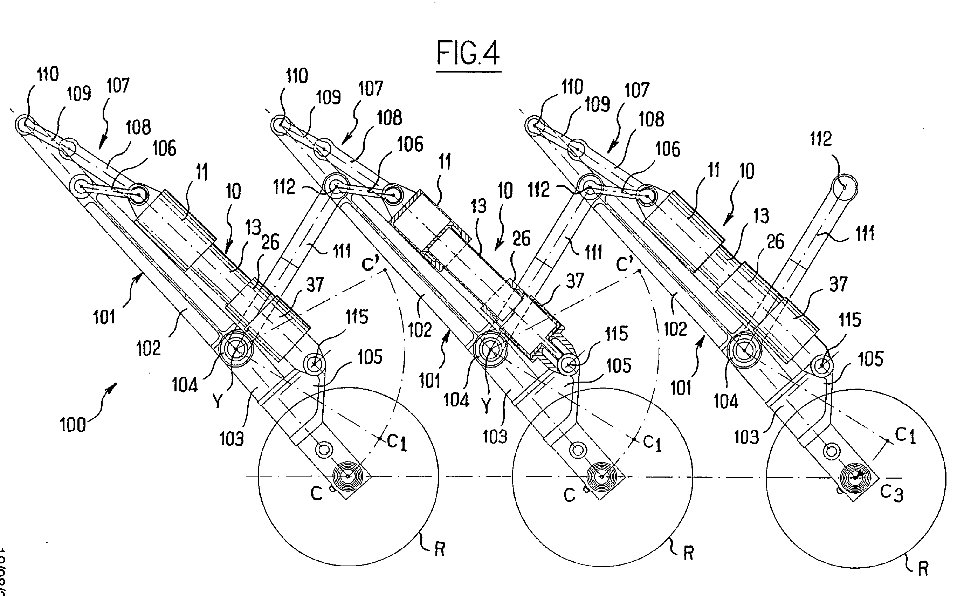

Sur la figure 4, la jambe arrière a au contraire son amortisseur 10 qui est en position d'allongement maximum.

Dans cette position, on distingue une longueur de la tige-piston 13 qui est largement inférieure à la longueur maximale représentée pour les autres jambes, c'est-à-dire que cette longueur correspond à l'enfoncement sous charge statique. Par contre, une longueur maximale est visible pour le caisson secondaire 26 qui est alors en position de sortie maximale hors de l'autre caisson 37. Par suite de cette commande d'allongement maximum d'amortisseur, le balancier 103 a pivoté dans le sens horaire, de sorte que le centre de sa paire de roues R est passé du point C1 correspondant à l'enfoncement sous charge statique à un point C3 correspondant à la position de rehaussement maximum de la jambe concernée 101.

Il sera naturellement avantageux de prévoir que les amortisseurs 10 du train illustré ont des circuits de commande agencés pour permettre une commande individuelle sélective ou une commande groupée du rallongement ou du raccourcissement desdits amortisseurs. Ceci permettra un actionnement extrêmement souple dans le sens d'un affaissement ou d'un rehaussement selon le cas, avec éventuellement une commande par paliers permettant plusieurs seuils successifs tant dans le rehaussement que dans l'affaissement.

Bien entendu, on prévoira aussi que les amortisseurs 10 du train sont tous dimensionnés pour garantir, par une butée d'appui associée, une garde au sol prédéterminée pour l'aéronef dans la position d'affaissement maximal des jambes 101 d'une même rangée, comme cela a été illustré sur la figure 3 pour la seule jambe arrière.

Il est ainsi aisé de commander avec une grande précision un changement d'assiette pour l'aéronef, par une commande simultanée de tous les amortisseurs concernés, avec par exemple un raccourcissement individuel d'une jambe dans le cas d'un changement de pneumatique, ou encore un raccourcissement individuel de la seule jambe avant dans le cas de la recherche d'un soulagement lors des manoeuvres en virage.

On pourra éventuellement prévoir que les organes de verrouillage hydraulique des amortisseurs seront commandables simultanément pour permettre, par leur ouverture, un affaissement naturel de l'aéronef sous l'effet de la charge statique exercée par ledit aéronef.

L'invention n'est pas limitée aux modes de réalisation qui viennent d'être décrits, mais englobe au contraire toute variante reprenant, avec des moyens équivalents, les caractéristiques essentielles énoncées plus haut, qui ne s'étend pas au delà du contenu de la demande telle qu'elle a été déposée.

En particulier, on pourra utiliser une génération électrique pour la commande de l'affaissement, du rehaussement et du verrouillage.

## Revendications

1. Amortisseur (10) de jambe de train d'atterrissage d'aéronef du type comportant un caisson principal (11) et une tige-piston (13) dont une extrémité coulisse dans ledit caisson principal coaxialement à l'axe (X) de celui-ci, ladite tige-piston (13) délimitant avec le caisson principal (11) une chambre principale (15) de fluide hydraulique et une chambre annulaire (16) de fluide hydraulique communiquant avec ladite chambre principale par l'intermédiaire d'un diaphragme associé (18), et ladite tige-piston (13) présentant intérieurement deux chambres adjacentes (19, 20) isolées l'une de l'autre par un piston séparateur (21), dont une chambre (19) de fluide hydraulique qui communique avec la chambre principale (15) par l'intermédiaire d'un diaphragme associé (17) et une chambre (20) de gaz sous pression, **caractérisé en ce qu'**il comporte en outre un premier caisson secondaire (26) dont une extrémité coulisse télescopiquement sur l'autre extrémité de la tige-piston précitée (13) en délimitant avec le fond (25) de ladite tige-piston une première chambre secondaire (30) de fluide hydraulique qui est fermée par un organe associé de verrouillage hydraulique (36) ainsi qu'une première chambre secondaire annulaire (31) de fluide hydraulique qui est reliée à un circuit de commande associé (34,35), permettant ainsi de raccourcir la longueur totale de l'amortisseur (10) en vue d'un affaissement de la jambe de train, ainsi qu'un deuxième caisson secondaire (37) coulissant télescopiquement sur l'autre extrémité du premier caisson secondaire (26) en délimitant avec le fond (28) dudit premier caisson secondaire une deuxième chambre secondaire (39) de fluide hydraulique qui est fermée par un organe associé de verrouillage hydraulique (46) ainsi qu'une deuxième chambre secondaire annulaire (40) de fluide hydraulique qui est reliée à un circuit de commande associé (44, 45), permettant ainsi de rallonger la longueur totale de l'amortisseur (10) en vue d'un rehaussement de la jambe de train.

2. Amortisseur selon la revendication 1, **caractérisé en ce que** la première chambre secondaire (30) de fluide hydraulique est séparée de la chambre (20) de gaz sous pression par une cloison intermédiaire formant le fond (25) de la tige-piston (13).

3. Amortisseur selon la revendication 1 ou la revendication 2, **caractérisé en ce qu'**en position de raccourcissement maximum dudit amortisseur par suite de la rentrée de la tige-piston (13) dans le premier caisson secondaire (26), ledit premier caisson secondaire (26) vient en butée contre le caisson principal (11), ce qui garantit une garde au sol prédéterminée (d) pour l'aéronef dans la position d'affaissement maximal des jambes de train concernées.

4. Amortisseur selon l'une des revendications 1 à 3, **caractérisé en ce qu'**en position de rallongement maximum dudit amortisseur par suite de la sortie du premier caisson secondaire (26) hors du deuxième caisson secondaire (37), un épaulement intérieur (41) dudit deuxième caisson secondaire vient en butée contre un épaulement extérieur (42) dudit premier caisson secondaire, ce qui garantit la constance de la position de rehaussement pour la jambe de train concernée.

5. Amortisseur selon l'une des revendications 1 à 4, **caractérisé en ce que** les circuits de commande associés aux première et deuxième chambres secondaires annulaires (31 ; 40) de fluide hydraulique comportent chacun une électrovanne (35 ; 45) actionnable individuellement.

6. Train d'atterrissage relevable d'aéronef, du type à relevage vertical, comportant une pluralité de jambes (101) agencées les unes derrière les autres pour former, en position train bas, une rangée parallèle au plan longitudinal médian de l'aéronef, chaque jambe (101) comportant une pièce de structure (102) rigidement solidaire d'une structure d'aéronef, un balancier (103) articulé sur l'extrémité inférieure de ladite pièce de structure de façon que ledit balancier soit déplaçable dans un plan vertical avec sa paire de roues (R), et un amortisseur interposé entre un appendice (105) du balancier et au moins un élément mobile (106, 108) faisant partie de la tringlerie de manoeuvre du train, **caractérisé en ce que** l'amortisseur de chaque jambe (101), est un amortisseur (10) selon l'une au moins des revendications 1 à 5, permettant de relever ou d'abaisser sélectivement une paire de roues (R), en vue d'un affaissement ou d'un rehaussement de ladite jambe, lorsque l'aéronef est à l'arrêt ou en déplacement lent au sol.

7. Train d'atterrissage selon la revendication 6, **caractérisé en ce que** les amortisseurs (10) dudit train ont des circuits de commande (34, 35, 44, 45) agencés pour permettre une commande individuelle sélective ou une commande groupée du rallongement ou du raccourcissement desdits amortisseurs.

8. Train d'atterrissage selon la revendication 7, **caractérisé en ce que** les amortisseurs (10) dudit train sont dimensionnés pour garantir, par une butée d'appui associée (12.1, 27.1), une garde au sol prédéterminée pour l'aéronef dans la position d'affaissement maximal des jambes (101) d'une même rangée.

## Claims

1. A damper (10) for an airplane landing gear leg, the damper being of the type comprising a main strut (11) and a rod-piston (13) having one end mounted to slide in said main strut along the axis (X) thereof, said rod-piston (13) co-operating with the main strut (11) to define a main hydraulic fluid chamber (15) and an annular hydraulic fluid chamber (16) communicating with said main chamber via an associated diaphragm (18), and said rod-piston (13) presenting internally two adjacent chambers (19, 20) isolated from each other by a separator piston (21), one of the adjacent chambers (19) being a hydraulic fluid chamber which communicates with the main chamber (15) via an associated diaphragm (17), and the other of the adjacent chambers (20) being a pressurized gas chamber, the damper being **characterized in that** it further comprises a first secondary strut (26) having one end mounted to slide telescopically on the other end of the above-mentioned rod-piston (13), co-operating with the end wall (25) of said rod-piston to define a first secondary hydraulic fluid chamber (30) which is closed by an associated hydraulic locking member (36), and a first annular secondary hydraulic fluid chamber (31) which is connected to an associated control circuit (34, 35) thus enabling the total length of the damper (10) to be shortened in order to allow the landing gear leg to contract, and a second secondary strut (37) mounted to slide telescopically on the other end of the first secondary strut (26), co-operating with the end wall (28) of said first secondary strut to define a second secondary hydraulic fluid chamber (39) which is closed by an associated hydraulic locking member (46), and a second annular secondary hydraulic fluid chamber (40) which is connected to an associated control circuit (44, 45), thus enabling the total length of the damper (10) to be lengthened in order to extend the landing gear leg.

2. A damper according to claim 1, **characterized in that** the first secondary hydraulic fluid chamber (30) is separated from the pressurized gas chamber (20) by an intermediate partition forming the end wall (25) of the rod-piston (13).

3. A damper according to claim 1 or claim 2, **characterized in that** in the maximally-shortened position of said damper due to the rod-piston (13) penetrating into the first secondary strut (26), said first secondary strut (26) comes into abutment against the main strut (11), thereby guaranteeing predetermined ground clearance (d) for the airplane in the maximally-contracted position of the corresponding landing gear legs.

4. A damper according to any one of claims 1 to 3, **characterized in that** in the maximally-lengthened position of said damper due to the first secondary strut (26) projecting out from the second secondary strut (37), an inside shoulder (41) of said second secondary strut comes into abutment against an outside shoulder (42) of said first secondary strut, thereby guaranteeing a constant extended position for the landing gear leg concerned.

5. A damper according to any one of claims 1 to 4, **characterized in that** each of the control circuits associated with the first and second annular secondary hydraulic fluid chambers (31; 40) comprises an individually-actuatable solenoid valve (35; 45).

6. Retractable landing gear for an airplane of the vertically-retractable type, the landing gear comprising a plurality of legs (101) arranged one behind another to form, in the gear-down position, a row that is parallel to the longitudinal midplane of the airplane, each leg (101) comprising a structural part (102) rigidly secured to an airplane structure, a rocker beam (103) hinged to the bottom end of said structural part so that said rocker beam is movable in a vertical plane together with its pair of wheels (R), and a damper interposed between an appendix (105) of the rocker beam and at least one movable element (106, 108) forming part of the landing gear control rodding, the landing gear being **characterized in that** the damper of each leg (101) is a damper (10) according to at least one of claims 1 to 5, enabling a pair of wheels (R) to be raised or lowered selectively in order to cause said leg to contract or to be extended, while the airplane is stationary or moving slowly on the ground.

7. Landing gear according to claim 6, **characterized in that** the dampers (10) of said landing gear have control circuits (34, 35, 44, 45) arranged to enable the lengthening or shortening of said dampers to be controlled either as a group or else selectively and individually.

8. Landing gear according to claim 7, **characterized in that** the dampers (10) of said landing gear are dimensioned to guarantee predetermined ground clearance for the airplane in the maximally-contracted position of the legs (101) in a given row, by means of an associated thrust abutment (12.1, 27.1).

## Patentansprüche

1. Federbeindämpfer (10) für ein Flugzeugfahrwerk, wobei der Federbeindämpfer von dem Typ ist, der ein Hauptgehäuse (11) und eine Kolbenstange (13) umfasst, deren eines Ende in dem genannten Hauptgehäuse koaxial zu dessen Achse (X) gleitet, wobei die Kolbenstange (13) mit dem Hauptgehäuse (11) eine Hauptkammer (15) mit Hydraulikfluid und eine Ringkammer (16) mit Hyddraulikfluid begrenzt, die mit der Hauptkammer über eine dazugehörige Membran (18) in Verbindung steht, und wobei die Kolbenstange (13) innen zwei aneinander angrenzende Kammern (19, 20) aufweist, die voneinander durch einen Trennkolben (21) getrennt sind, darunter eine Kammer (19) mit Hydraulikfluid, die mit der Hauptkammer (15) über eine dazugehörige Membran (17) in Verbindung steht, und eine Kammer (20) mit Druckgas, **dadurch gekennzeichnet, dass** er ferner ein erstes Nebengehäuse (26) umfasst, dessen eines Ende teleskopisch an dem anderen Ende der vorgenannten Kolbenstange (13) verschiebbar ist und dabei mit dem Boden (25) der Kolbenstange eine erste Nebenkammer (30) mit Hydraulikfluid begrenzt, die von einem dazugehörigen hydraulischen Verriegelungselement (36) verschlossen ist, sowie eine erste ringförmige Nebenkammer (31) mit Hydraulikfluid, die mit einem dazugehörigen Steuerkreis (34, 35) verbunden ist, der auf diese Weise das Verkürzen der Gesamtlänge des Dämpfers (10) für ein Einfahren des Fahrwerkfederbeines ermöglicht, sowie ein zweites Nebengehäuse (37), das teleskopisch an dem anderen Ende des ersten Nebengehäuses (26) verschiebbar ist und dabei mit dem Boden (28) des ersten Nebengehäuses eine zweite Nebenkammer (39) mit Hydraulikfluid begrenzt, die von einem dazugehörigen hydraulischen Verriegelungselement (46) verschlossen ist, sowie eine zweite ringförmige Nebenkammer (40) mit Hydraulikfluid, die mit einem dazugehörigen Steuerkreis (44, 45) verbunden ist, der auf diese Weise das Verlängern der Gesamtlänge des Dämpfers (10) für ein Ausfahren des Fahrwerkfederbeines ermöglicht.

2. Dämpfer nach Anspruch 1, **dadurch gekennzeichnet, dass** die erste Nebenkammer (30) mit Hydraulikfluid von der Kammer (20) mit Druckgas durch eine Zwischenwand getrennt ist, die den Boden (25) der Kolbenstange (13) bildet.

3. Dämpfer nach Anspruch 1 oder Anspruch 2, **dadurch gekennzeichnet, dass** in der maximalen Verkürzungsposition des Dämpfers infolge des Einziehens der Kolbenstange (13) in das erste Nebengehäuse (26) das genannte erste Nebengehäuse (26) an dem Hauptgehäuse (11) zur Anlage kommt, wodurch eine vorgegebene Bodenfreiheit (d) für das Flugzeug in der maximalen Einfahrposition der betreffenden Fahrwerkfederbeine garantiert wird.

4. Dämpfer nach einem der Ansprüche 1 bis 3, **dadurch gekennzeichnet, dass** in der maximalen Verlängerungsposition des Dämpfers infolge des Austritts des ersten Nebengehäuses (26) aus dem zweiten Nebengehäuse (37) eine innere Schulter (41) des genannten zweiten Nebengehäuses an einer äußeren Schulter (42) des ersten Nebengehäuses zur Anlage kommt, wodurch die Konstanz der Ausfahrposition für das betreffende Fahrwerkfederbein garantiert wird.

5. Dämpfer nach einem der Ansprüche 1 bis 4, **dadurch gekennzeichnet, dass** die zu der ersten und der zweiten ringförmigen Nebenkammer (31; 40) mit Hydraulikfluid gehörigen Steuerkreise jeweils ein einzeln betätigbares Elektroventil (35; 45) umfassen.

6. Einziehbares Flugzeugfahrwerk vom Typ mit vertikalem Einzug, umfassend eine Vielzahl von Federbeinen (101), die hintereinander angeordnet sind, um in der ausgefahrenen Position eine zur Längsmittelebene des Flugzeugs parallele Reihe zu bilden, wobei jedes Bein (101) ein Strukturteil (102) umfasst, das starr mit einer Flugzeugstruktur verbunden ist, einen Schwenkhebel (103), der an dem unteren Ende des Strukturteils derart angelenkt ist, dass der Schwenkhebel in einer vertikalen Ebene mit seinem Räderpaar (R) bewegbar ist, sowie einen Dämpfer, der zwischen einem Ansatzstück (105) des Schwenkhebels und mindestens einem beweglichen Element (106, 108) angeordnet ist, das zum Lenkgestänge des Fahrwerks gehört, **dadurch gekennzeichnet, dass** der Dämpfer (10) für jedes Bein (101) ein Dämpfer (10) nach einem der Ansprüche 1 bis 5 ist, der ein selektives Einziehen bzw. Absenken eines Räderpaares (R) für ein Einfahren bzw. Ausfahren des Beines bei Stillstand des Flugzeugs oder bei einer langsamen Fahrt am Boden ermöglicht.

7. Fahrwerk nach Anspruch 6, **dadurch gekennzeichnet, dass** die Dämpfer (10) des Fahrwerks Steuerkreise (34, 35, 44, 45) haben, die derart ausgebildet sind, dass sie eine selektive individuelle Steuerung oder eine Gruppensteuerung der Verlängerung bzw. der Verkürzung der Dämpfer gestatten.

8. Fahrwerk nach Anspruch 7, **dadurch gekennzeichnet, dass** die Dämpfer (10) des Fahrwerks derart bemessen sind, dass sie über einen dazugehörigen Anschlag (12.1, 27.1) eine vorgegebene Bodenfreiheit für das Flugzeug in der maximalen Einfahrposition der Beine (101) einer selben Reihe garantieren.
